Europäisches Patentamt

European Patent Office

Office européen des brevets

(11) Veröffentlichungsnummer: **0 518 177 A1**

(12) **EUROPÄISCHE PATENTANMELDUNG**

(21) Anmeldenummer: **92109255.7**

(22) Anmeldetag: **02.06.92**

(51) Int. Cl.5: **B23B 47/28**

(30) Priorität: **08.06.91 DE 4118991**

(43) Veröffentlichungstag der Anmeldung:
**16.12.92 Patentblatt 92/51**

(84) Benannte Vertragsstaaten:
**AT BE CH DE DK ES FR GB IT LI NL SE**

(71) Anmelder: **Werkzeug-Gesellschaft mit beschränkter Haftung**
**Löhstrasse 15**
**W-5441 Weibern(DE)**

(72) Erfinder: **Degen, Klemens**
**Zur Geisley 8**
**W-5441 Weibern(DE)**
Erfinder: **Schüller, Hans-Jürgen**
**Schulstrasse 3**
**W-5481 Königsfeld(DE)**

(74) Vertreter: **Peerbooms, Rudolf, Dipl.-Phys.**
**Postfach 200 208 Dickmannstrasse 45c**
**W-5600 Wuppertal 2(DE)**

(54) **Bohrlehre zur Ausbildung bestimmter Bohrlochbilder an Werkstücken.**

(57) Eine Bohrlehre zur Ausbildung bestimmter Bohrlochbilder an Werkstücken umfaßt eine Lochschiene (1), mindestens einen, quer zur Lochreihe (8) verstellbaren Winkelanschlag (3) und mindestens einen, längs der Lochschiene (1) verstellbaren Seitenanschlag (4). Längs der Lochschiene (1) sind ein Schlitten (2), welcher eine auf eines der Löcher (8) der Lochschiene (1) jeweils ausrichtbare Bohrbuchse (15) trägt, und der Seitenanschlag (4) verschiebbar geführt, wobei der Seitenanschlag (4) ein längliches Anschlagstück (42) aufweist, das in Längsrichtung der Lochschiene (1) an einem Seitenanschlagträger (43) schrittweise einstellbar ist, wobei der Seitenanschlagträger (43) das Arretierglied (52) aufweist.

Fig.1

Die Erfindung betrifft eine Bohrlehre zur Ausbildung bestimmter Bohrlochbilder an Werkstücken, z.B. an miteinander zu verdübelnden Brettern oder an mit Lochreihen zu versehenden Schrank- oder Regalwänden, mit einer auf das zu bearbeitende Werkstück aufzulegenden Lochschiene, die eine Reihe äquidistanter Löcher aufweist, mit mindestens einem, quer zur Lochreihe verstellbaren Winkelanschlag zur Einstellung des Abstandes der Lochreihe von einer Werkstückkante und mit mindestens einem, längs der Lochschiene verstellbaren Seitenanschlag.

Es sind Bohrlehren bekannt, die entweder für die Ausbildung der Bohrlochbilder bei miteinander zu verdübelnden Brettern oder für die Ausbildung von parallelen Lochreihen an Schrank- oder Regalwänden konzipiert sind, die aber für jeweils den anderen Anwendungsfall nicht, oder nur umständlich einsetzbar sind. Darüber hinaus sind die bekannten Bohrlehren auf einen bestimmten Bohrlochdurchmesser festgelegt, so daß der Handwerker oder Heimwerker für die verschiedenen, in der Praxis verlangten Bohrlochdurchmesser verschiedene Bohrlehren anschaffen muß.

Der Erfindung liegt die Aufgabe zugrunde, eine möglichst universell einsetzbare Bohrlehre zu schaffen, die in der Handhabung einfach und preiswert herstellbar ist.

Ausgehend von einer Bohrlehre der eingangs genannten Art, ist die Lösung dieser Aufgabe erfindungsgemäß dadurch erreicht, daß längs der Lochschiene ein Schlitten, welcher eine auf eines der Löcher der Lochschiene jeweils ausrichtbare Bohrbuchse trägt, und der Seitenanschlag verschiebbar geführt sind, daß dem Schlitten und dem Seitenanschlag je ein in ein Loch der Lochschiene eingreifendes Arretierglied zugeordnet ist und daß der Seitenanschlag ein Anschlagstück aufweist, das in Längsrichtung der Lochschiene an einem Seitenanschlagträger schrittweise einstellbar ist, wobei der Seitenanschlagträger das Arretierglied aufweist.

Durch die Erfindung werden eine Reihe von Vorteilen erreicht. Da die Bohrbuchse mittels des Schlittens längs der Lochschiene verschiebbar ist, benötigt die Bohrlehre nur eine einzige Bohrbuchse, die zu dem jeweils benutzten Loch der Lochschiene verfahren wird, wo sie durch das in ein anderes Loch der Lochschiene eingreifende Arretierglied jedesmal exakt positioniert wird. Der zweiteilig aus Anschlagstück und Seitenanschlagträger aufgebaute Seitenanschlag ist ebenfalls längs der Schiene verschiebbar und mittels des am Seitenanschlagträger angeordneten Arretiergliedes an jedem Loch der Lochreihe grob arretierbar, wonach das längliche Anschlagstück schrittweise feineinstellbar ist. Diese Feineinstellung wird bei einem Versetzen des Seitenanschlages von Loch zu Loch beibehalten. Die getroffene Feineinstellung, die an einer Skala des Seitenanschlagträgers ablesbar ist, kann beim Umsetzen des Seitenanschlages von einem Lochschienenende zum anderen Lochschienenende mühelos - und zwar immer für das zur Lochschienenmitte hin weisende Anschlagende des Anschlagstückes - vorab eingestellt werden, was insbesondere die Ausbildung von fluchtenden Lochreihen bei zwei zu verdübelnden Brettern erleichtert, da nunmehr die Abstände der Bohrlöcher von den aneinanderzulegenden Brettkanten problemlos bei beiden Brettern eingehalten werden können, auch wenn die Lochreihe nicht exakt mittig am stirnseitig zu bohrenden Brett liegt, was anhand der Figurenbeschreibung noch detaillierter erläutert wird. Vorzugsweise sind der Bohrlehre zwei solcher Seitenanschläge zugeordnet. Wenn ein Seitenanschlag entsprechend dem gewünschten Randabstand der Lochreihe feineingestellt ist, kann der andere Seitenanschlag vorab in gleicher Weise feineingestellt werden, so daß die Bohrlehre vollständig auf einen bestimmten Anwendungsfall eingerichtet werden kann.

In Weiterbildung der Erfindung kann dem Schlitten ein Satz im Innendurchmesser unterschiedlicher, auswechselbarer Bohrbuchsen zugeordnet sein. Die Bohrlehre ist somit auch für verschiedene Bohrlochdurchmesser einsetzbar, wozu lediglich die jeweils passende Bohrbuchse auszuwählen ist.

Die Lochschiene besteht vorteilhafterweise aus einem Flachprofil, z.B. einem Aluminiumstrangprofil, welches an seinen Hauptseiten mit C-Nuten zur Führung des Schlittens und der Seitenanschläge versehen ist, wobei an der Führungsnut für die Seitenanschläge zugleich auch ein oder zwei Winkelanschläge geführt sein können. Die Bohrlehre nach der Erfindung ist preiswert herstellbar, für die verschiedensten Anwendungsfälle einsetzbar und jeweils bequem handhabbar.

Weitere Merkmale der Erfindung sind in den Unteransprüchen angegeben.

Der Gegenstand nach der Erfindung wird im folgenden anhand der Zeichnung näher erläutert, in der zeigen:

Fig. 1    in einer perspektivischen Explosivdarstellung eine Bohrlehre nach der Erfindung,

Fig. 2    in vergrößertem Maßstab den Bohrbuchsen-Schlitten nach Fig. 1, eingeschoben in eine Lochschiene,

Fig. 3    im Längsschnitt eine abgewandelte Ausführungsform eines Bohrbuchsen-Schlittens, zusammen mit einem Satz zugeordneter Bohrbuchsen und einer Festspannmutter,

Fig. 4    in vergrößertem Maßstab einen Winkelanschlag der Bohrlehre in Verbindung mit einem Stück der Lochschiene,

Fig. 5 in vergrößertem Maßstab einen Seitenanschlag der Bohrlehre in Verbindung mit einem Stück der Lochschiene,

Fig. 6 eine Seitenansicht auf den Seitenanschlagträger nach Fig. 5,

Fig. 7 den Seitenanschlagträger, in Fig. 7 von unten gesehen,

Fig. 8 eine schematische Darstellung zur Erläuterung der Handhabung der Bohrlehre bei miteinander zu verdübelnden Brettern,

Fig. 9 eine abgewandelte Ausführungsform eines Bohrbuchsen-Schlittens, eingesetzt in die Lochschiene, und

Fig. 10 eine Seitenansicht auf den Bohrbuchsen-Schlitten nach Fig. 9.

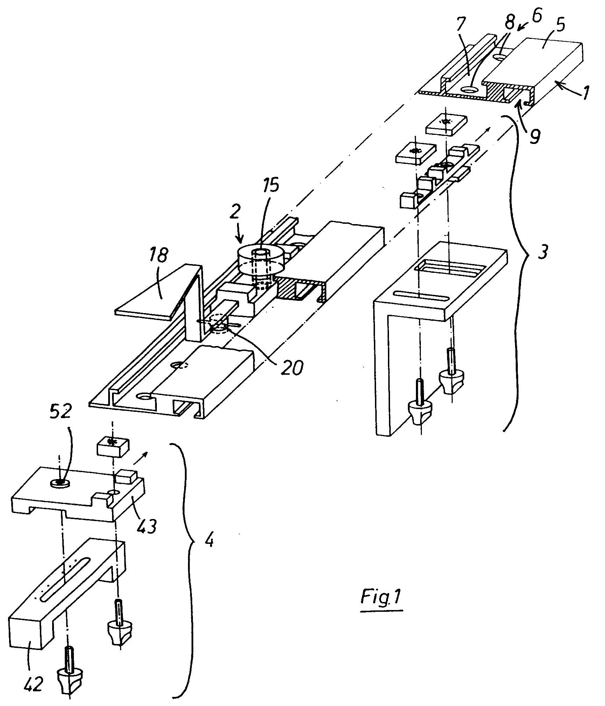

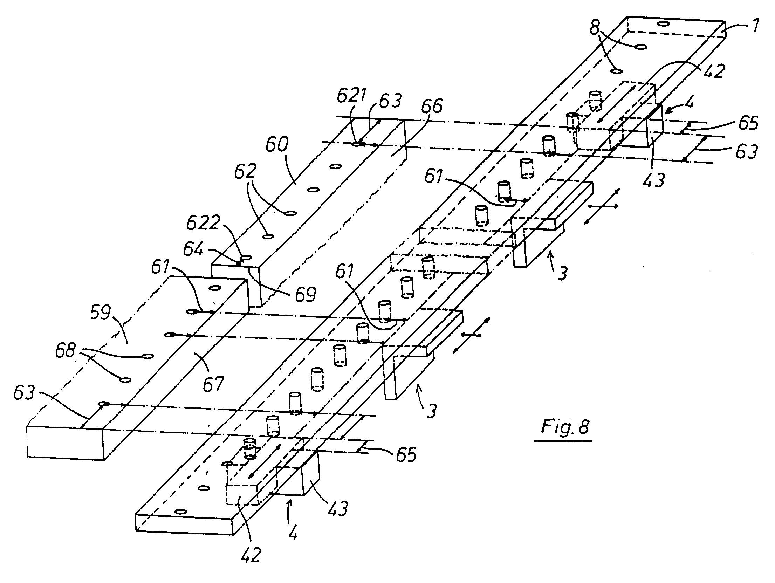

Die in Fig. 1 gezeigte Bohrlehre besteht aus einer Lochschiene 1, aus einem an der Oberseite der Lochschiene 1 verschieblich geführten Bohrbuchsen-Schlitten 2 und aus einem Winkelanschlag 3 und einem Seitenanschlag 4, die an der Unterseite der Lochschiene 1 verschiebbar sind und deren Bauteile jeweils in Explosivdarstellung dargestellt sind. In der Regel sind der Bohrlehre zwei identische Winkelanschläge 3 und zwei identische Seitenanschläge 4 zugeordnet, vgl. auch die schematische Darstellung nach Fig. 8.

Die Lochschiene 1 besteht aus einem Flachprofil, vorzugsweise aus Aluminiumstrangprofil, welches eine zur Oberseite 5 offene C-Führungsnut 6 für den Schlitten 2 aufweist, wobei am Boden 7 der C-Nut 6 eine Reihe äquidistanter Löcher 8 ausgebildet sind, die vorzugsweise einen Mittenabstand von 32 Millimetern aufweisen. An ihrer auf das Werkstück aufzulegenden Unterseite weist die Lochschiene 1 - versetzt neben der C-Nut 6 - eine weitere nach unten offene C-Nut 9 auf, die zur Führung des Winkelanschlages 3 und des Seitenanschlages 4 dient.

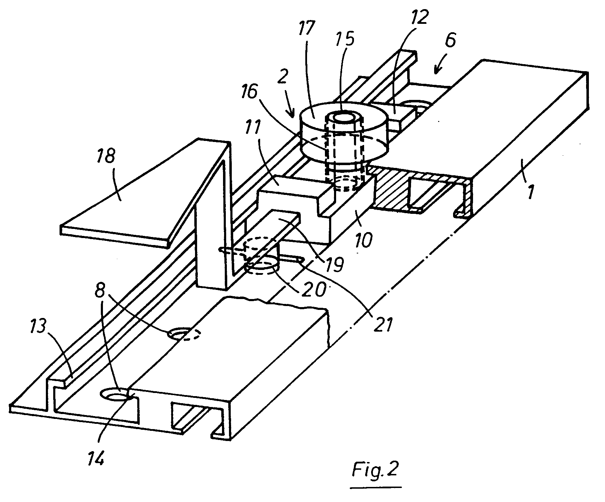

Der in Fig. 2 in vergrößertem Maßstab gezeigte Bohrbuchsen-Schlitten 2, der aus Kunststoff bestehen kann, weist einen flachen Führungskörper 10 auf, der von der C-Nut 6 aufgenommen und endseitig mit zwei Ansätzen 11, 12 versehen ist, die von den Randschenkeln 13, 14 eingefaßt sind. In seinem mittleren Bereich trägt der Führungskörper 10 eine Bohrbuchse 15, die mit einem Außengewinde 16 zur Aufnahme einer Mutter 17, z.B. Rändelmutter, versehen ist, mittels der der Schlitten 2 an den Randschenkeln 13, 14 festspannbar ist. Von einem Stirnende des Führungskörpers 10 ragt ein abgekröpfter, in einem Handgriff 18 endender Steg 19 ab, der elastisch hochbiegbar ist und an seiner Unterseite ein angeformtes Arretierglied 20 in Form eines Zapfens trägt, der spielfrei in eines der Löcher 8 paßt und mittels des Handgriffes 18 zwecks Verstellung des Schlittens aushebbar ist. Der Mittenabstand zwischen der Bohrbuchse 15 und dem Arretierglied 20 ist gleich dem Einfachen - oder Mehrfachen - des Mittenabstandes zwischen zwei benachbarten Löchern 8, so daß beim Einrasten des Arretiergliedes 20 die Bohrbuchse 15 jeweils exakt auf ein Loch 8 ausgerichtet ist. Das Arretierglied 20 trägt im oberen Bereich einen die Randschenkel 13, 14 untergreifenden Querstift 21 zur Begrenzung der Aushebebewegung.

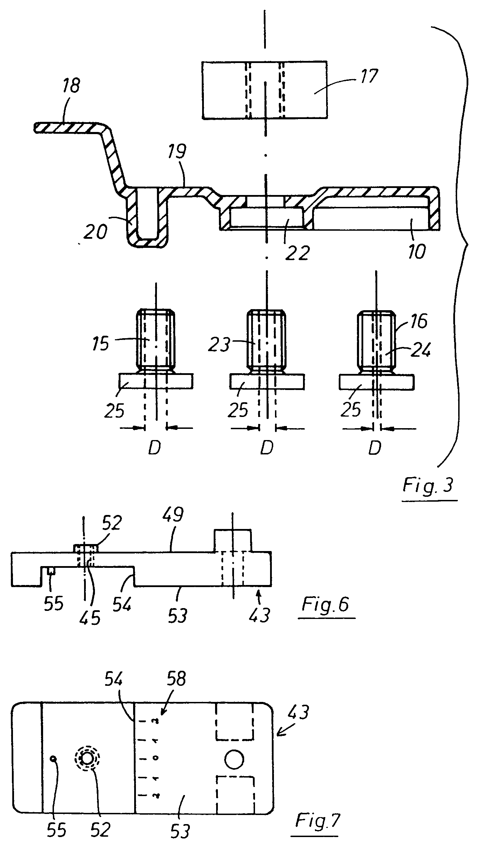

Fig. 3 zeigt in einem Längsschnitt detaillierter die konstruktive Ausbildung des Schlittens 2, dessen Führungskörper 10 aus einem Kunststoffspritzteil gleichmäßiger Wandstärke besteht, der mit einer abgestuften Durchgangsbohrung 22 für die Bohrbuchse 15 versehen ist. Dem Schlitten ist ein Satz von im Innendurchmesser D jeweils unterschiedlichen Bohrbuchsen 15, 23, 24 zugeordnet, die jeweils am unteren Ende einen flanschförmigen Fuß 25 aufweisen, der versenkt vom erweiterten Teil der Durchgangsbohrung 22 aufgenommen wird. Alle Bohrbuchsen sind mit identischem Außengewinde 16 zur Aufnahme der Mutter 17 versehen.

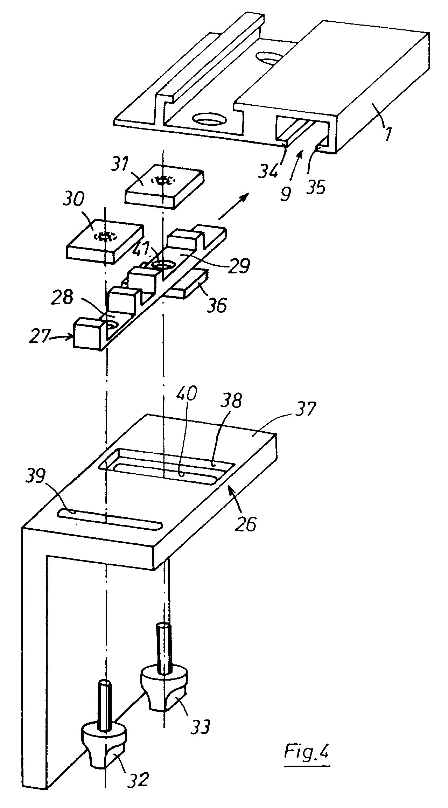

Der in Fig. 4 in vergrößertem Maßstab dargestellte Winkelanschlag 3 besteht aus einem Winkelstück 26, einem länglichen Winkelstückträger 27, aus zwei rechteckigen, in passende Aufnahmen 28, 29 des Trägers 27 einzufügenden Muttern 30, 31 und zwei zugeordneten Griffschrauben 32, 33. Der Träger 27 ist zusammen mit den Muttern 30, 31 in die C-Nut 9 einschiebbar, wobei die Muttern 30, 31 die Randschenkel 34, 35 der C-Nut hintergreifen. An die Unterseite des Trägers 27 ist eine Querleiste 36 angeformt, die bei eingeschobenem Träger 27 an der Unterseite der Lochschiene 1 anliegt und die quer zur Lochschiene 1 gerichtet ist. Das Winkelstück 26 weist an seinem an die Lochschiene 1 anzulegenden Schenkel 37 eine rechteckige, quer zur Lochschiene 1 verlaufende Ausnehmung 38 auf, die beträchtlich länger als die Querleiste 36 ist und die im übrigen spielfrei die Querleiste 36 als Führung bei einer Querverstellung des Winkelstückes 26 aufnimmt. Der Schenkel 37 ist ferner mit zwei parallelen, quer zur Lochschiene 1 gerichteten Langlöchern 39, 40 versehen, von denen letzteres am Boden der Ausnehmung 38 angeordnet ist.

Die Griffschraube 32 durchsetzt das Langloch 39 im Schenkel 37 und ein Durchgangsloch im Träger 27 und ist in die Mutter 30 eingeschraubt. Durch Anziehen der Griffschraube 32 ist der Träger 27 zusammen mit dem Winkelstück 26 an der Lochschiene festspannbar, wozu die Wandstärke des Trägers 27 im Bereich der Aufnahme 28 niedriger als die Wandstärke der Randschenkel 34, 35 bemessen ist. Die Schraube 33 durchsetzt das Langloch 40 im Schenkel 37 und ein Durchgangsloch 41 im Träger 27 und ist in der Haltemutter 31 eingeschraubt. Das Durchgangsloch 41 ist beim Ausführungsbeispiel im Bereich der Querleiste 36 am Träger 27 ausgebildet. Im Bereich der Aufnahme 29 ist die Handstärke des Trägers 27 deutlich größer als die Wandstärke der Randschenkel 34, 35, so daß mittels der Schraube 33 nur das Winkelstück 26 am Träger 27 festgespannt wird. Die Arretierung des Winkelstückes 26 in der jeweils gewünschten Anschlagstellung wird bei noch gelockerter Schraube 32 vorgenommen, so daß der Winkelanschlag auch noch nach seiner Quereinstellung längs der Lochschiene 1 verschiebbar ist.

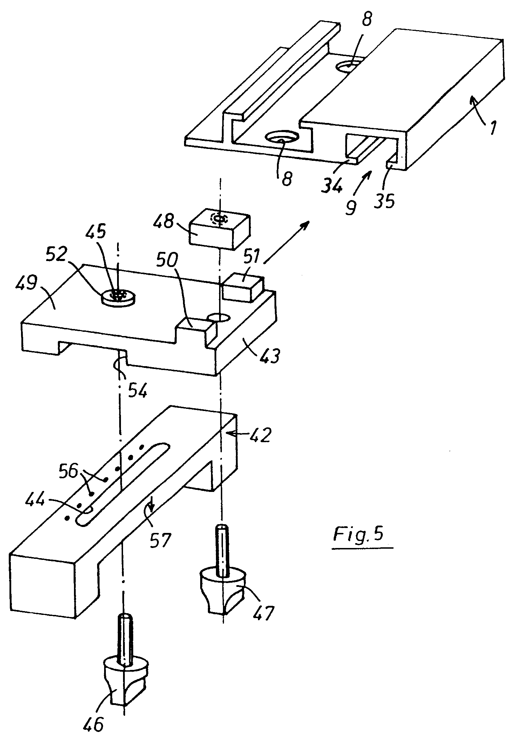

Der Seitenanschlag 4, vgl. auch Fig. 5, 6 und 7, besteht aus einem länglichen Anschlagstück 42, einem Seitenanschlagträger 43, aus einer ein längsgerichtetes Langloch 44 des Anschlagstückes 42 durchsetzenden und in ein Gewinde 45 des Trägers 43 eingeschraubten Griffschraube 46, sowie aus einer Griffschraube 47, die nur den Träger 43 durchsetzt und in eine zugeordnete, rechteckige Mutter 48 eingeschraubt ist. Der Träger 43 weist an seiner an die Unterseite der Lochschiene 1 anzulegenden Hauptfläche 49 zwei zwischen die Randschenkel 34, 35 einführbare, rechteckige Führungsansätze 50, 51 zur Aufnahme der Mutter 48, wobei die Mutter 48 wiederum die Randschenkel 34, 35 hintergreift. Ferner ist der über die Lochreihe 8 hinausragende Träger 43 an dieser Fläche 49 mit einem Arretierglied 52 in Form eines kurzen, zylindrischen Zapfens versehen, der exakt in die Löcher 8 der Lochschiene paßt. An der unteren Hauptfläche 53 ist der Träger 43 mit einer parallel zur Lochschiene 1 gerichteten, rechteckigen Führungsnut 54 zur Aufnahme und Führung des etwa quaderförmigen Anschlagstückes 42 versehen.

Der Träger 43 weist ferner einen in die Führungsnut 54 hineinragenden, stiftförmigen Vorsprung 55 auf, dessen Mittelachse mit der Mittelachse des Arretiergliedes 52 in derselben Querebene des Trägers 43 liegt, und an dem Anschlagstück 42 sind eine Reihe äquidistanter Aufnahmelöcher 56 für den Vorsprung 55 vorgesehen. Dem mittleren Loch ist eine Markierung 57 am Anschlagstück 42 zugeordnet, während an der Hauptfläche 53 des Trägers 43 eine Skala 58 angeordnet ist, deren Nullpunkt in der den Stift 55 und das Arretierglied 52 enthaltenden Querebene liegt und die nach beiden Seiten zählt. Das Anschlagstück 42 ist somit relativ zum Anschlagträger 43 und damit relativ zu einem Loch 8 der Schiene 1 schrittweise verstellbar und arretierbar, wobei an der Skala 58 sofort die getroffene Feineinstellung abzulesen ist.

In Fig. 8 ist schematisch die Handhabung der Bohrlehre bei der Herstellung einer Eck-Dübelverbindung zwischen zwei Holzbrettern 59, 60 gezeigt. Zunächst werden die beiden Winkelanschläge 3 in ihrem Querabstand 61 zu der Lochreihe 8 derart eingestellt, daß die im stirnseitig zu bohrenden Brett 60 auszubildenden Bohrlöcher 62 einigermaßen längsmittig liegen. Sodann wird der in Fig. 8 obere Seitenanschlag 4 eingestellt, indem zunächst der Träger 43 in Ausrichtung auf eines der Löcher 8 festgespannt und anschließend das Anschlagstück 42 in diskreten Schritten auf eine solche Position eingestellt wird, daß die randseitig auszubildenden Bohrungen 621 und 622 ausreichende Randabstände 63, 64 aufweisen. An der Skala 58 des Seitenanschlages 4 wird die getroffene Feineinstellung des Anschlagstückes 42 abgelesen, und bei dem anderen, in Fig. 8 am unteren Ende der Lochschiene 1 angebrachten Seitenanschlag 4 wird das Anschlagstück 42 in eine gleiche Position eingestellt, wobei aber nunmehr das Anschlagstück 42 in entgegengesetzter Richtung, aber um den gleichen Abstandsbetrag 65 über den Träger 43 vorsteht, so daß sich beim flachseitig zu bohrenden Brett 59 bei gleichen Brettbreiten wiederum die gleichen Randabstände 63 und 64 ergeben. Das Brett 60 wird dann - bei Anlage seiner Hauptfläche 66 am Winkelanschlag 3 - mit den Bohrlöchern 62 versehen, wobei der in Fig. 8 obere Seitenanschlag 4 benutzt wird. Anschließend wird das Brett 59 mit seiner Stirnseite 67, die bei der fertigen Eckverbindung mit der Hauptfläche 66 des Brettes 60 fluchten soll, an die Winkelanschläge 3 angelegt und der in Fig. 8 untere Seitenanschlag 4 verwendet, so daß die Bohrlöcher 62 und 68 jeweils mit gleichem, bezüglich der Randabstände 63, 64 jedoch spiegelverkehrtem Lochbild ausgebildet werden. Nach Kippen des Brettes 60 um 180° um seine Randkante 69 sind die Bohrlochbilder auch bezüglich ihrer Randabstände ausgerichtet, und zwar unabhängig davon, ob die Bohrlöcher 62 im stirnseitig zu bohrenden Brett 60 exakt längsmittig liegen oder nicht.

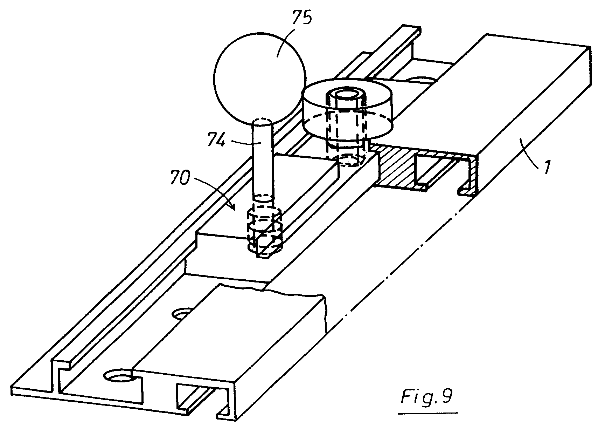

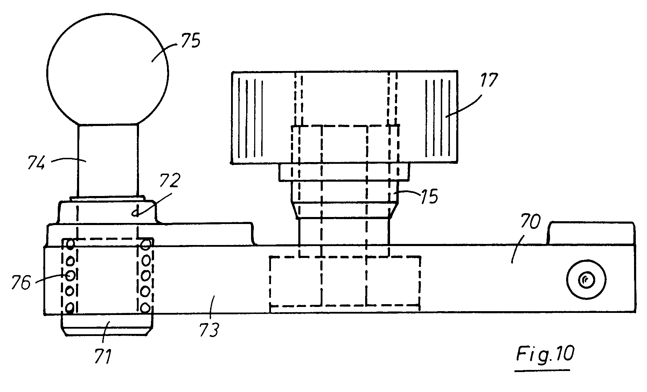

Die Fig. 9 und 10 zeigen eine abgewandelte Ausführungsform eines Bohrbuchsen-Schlittens 70. Das Arretierglied 71 besteht hier aus dem Fuß eines eine Stufenbohrung 72 des Führungskörpers 73 durchsetzenden Bolzens 74, der an seinem oberen Ende mit einem Kugelgriff 75 versehen ist. Zwischen einer Ringschulter der Stufenbohrung 72 und einer Ringschulter des Bolzens 74 ist eine Druckfeder 76 eingespannt, die das Arretierglied 71 in Eingriff mit einem Loch 8 hält. Das Arretierglied 71 ist gegen die Kraft der Druckfeder 76 in den erweiterten Teil der Stufenbohrung 72 von Hand zurückziehbar.

Bezugszeichenliste

| | |
|---|---|
| 1 | Lochschiene |
| 2 | Schlitten |
| 3 | Winkelanschlag |
| 4 | Seitenanschlag |
| 5 | Oberseite |
| 6 | C-Nut |

| 7 | Boden |
|---|---|
| 8 | Löcher |
| 9 | C-Nut |
| 10 | Führungskörper |
| 11 | Ansatz |
| 12 | Ansatz |
| 13 | Randschenkel |
| 14 | Randschenkel |
| 15 | Bohrbuchse |
| 16 | Außengewinde |
| 17 | Mutter |
| 18 | Handgriff |
| 19 | Steg |
| 20 | Arretierglied |
| 21 | Querstift |
| 22 | Durchgangsbohrung |
| 23 | Bohrbuchse |
| 24 | Bohrbuchse |
| 25 | Fuß |
| 26 | Winkelstück |
| 27 | Träger |
| 28 | Aufnahme |
| 29 | Aufnahme |
| 30 | Mutter |
| 31 | Mutter |
| 32 | Griffschraube |
| 33 | Griffschraube |
| 34 | Randschenkel |
| 35 | Randschenkel |
| 36 | Querleiste |
| 37 | Schenkel |
| 38 | Ausnehmung |
| 39 | Langloch |
| 40 | Langloch |
| 41 | Durchgangsloch |
| 42 | Anschlagstück |
| 43 | Träger |
| 44 | Langloch |
| 45 | Gewinde |
| 46 | Griffschraube |
| 47 | Griffschraube |
| 48 | Mutter |
| 49 | Hauptfläche |
| 50 | Führungsansatz |
| 51 | Führungsansatz |
| 52 | Arretierglied |
| 53 | Hauptfläche |
| 54 | Führungsnut |
| 55 | Vorsprung |
| 56 | Löcher |
| 57 | Markierung |
| 58 | Skala |
| 59 | Brett |
| 60 | Brett |
| 61 | Querabstand |
| 62 | Bohrlöcher |
| 63 | Randabstand |
| 64 | Randabstand |
| 65 | Abstand |
| 66 | Hauptfläche |
| 67 | Stirnseite |
| 68 | Bohrlöcher |
| 69 | Randkante |
| 70 | Schlitten |
| 71 | Arretierglied |
| 72 | Stufenbohrung |
| 73 | Führungskörper |
| 74 | Bolzen |
| 75 | Griffkugel |
| 76 | Druckfeder |
| 621 | Bohrloch |
| 622 | Bohrloch |
| D | Innendurchmesser |

## Patentansprüche

1. Bohrlehre zur Ausbildung bestimmter Bohrlochbilder an Werkstücken, z.B. an miteinander zu verdübelnden Brettern oder an mit Lochreihen zu versehenden Schrank- oder Regalwänden, mit einer auf das zu bearbeitende Werkstück aufzulegenden Lochschiene, die eine Reihe äquidistanter Löcher aufweist, mit mindestens einem, quer zur Lochreihe verstellbaren Winkelanschlag zur Einstellung des Abstandes der Lochreihe von einer Werkstückkante und mit mindestens einem, längs der Lochschiene verstellbaren Seitenanschlag, dadurch gekennzeichnet, daß längs der Lochschiene (1) ein Schlitten (2), welcher eine auf eines der Löcher (8) der Lochschiene (1) jeweils ausrichtbare Bohrbuchse (15) trägt, und der Seitenanschlag (4) verschiebbar geführt sind, daß dem Schlitten (2) und dem Seitenanschlag (4) je ein in ein Loch (8) der Lochschiene (1) eingreifendes Arretierglied (20 bzw. 52) zugeordnet ist und daß der Seitenanschlag (4) ein Anschlagstück (42) aufweist, das in Längsrichtung der Lochschiene (1) an einem Seitenanschlagträger (43) schrittweise einstellbar ist, wobei der Seitenanschlagträger (43) das Arretierglied (52) aufweist.

2. Bohrlehre nach Anspruch 1, dadurch gekennzeichnet, daß dem Schlitten (2) ein Satz im Innendurchmesser (D) unterschiedlicher, auswechselbarer Bohrbuchsen (15, 23, 24) zugeordnet ist.

3. Bohrlehre nach Anspruch 1 oder 2, dadurch gekennzeichnet, daß die Bohrlehre zwei identische Seitenanschlagträger (43) mit schrittweise verstellbaren Anschlagstücken (42) aufweist.

4. Bohrlehre nach einem oder mehreren der Ansprüche 1 bis 3, dadurch gekennzeichnet, daß an der Lochschiene (1) ein Winkelstückträger (27) längsverschiebbar geführt ist, an welchem ein Winkelstück (26) quer zur Lochreihe (8) stufenlos verstellbar ist.

**5.** Bohrlehre nach den Ansprüchen 1 bis 4, dadurch gekennzeichnet, daß die Lochschiene (1) aus einem Flachprofil besteht, welches eine zur Oberseite (5) der Lochschiene (1) hin offene C-Nut (6) zur Führung des Schlittens (2) und eine zur Unterseite der Lochschiene (1) hin offene C-Nut (9) zur Führung der Seiten- und Winkelanschlagträger (43, 27) aufweist, wobei im Boden der C-Nut (6) für die Schlittenführung die Lochreihe (8) ausgebildet ist und die andere C-Nut (9) versetzt neben der Lochreihe (8) angeordnet ist.

**6.** Bohrlehre nach ein oder mehreren der Ansprüche 1 bis 5, dadurch gekennzeichnet, daß das Arretierungsglied (20) des Schlittens (2) aus einem durch Federkraft belasteten Zapfen (20) besteht, welcher mittels einer Handhabe (18) entriegelbar ist.

**7.** Bohrlehre nach den Ansprüchen 1 bis 6, dadurch gekennzeichnet, daß die Bohrbuchse (15) mit einem Fuß (25) den Schlitten (2) untergreift und auf einem darüberliegenden Außengewinde (16) eine Mutter (17) zur Festspannung des Schlittens (2) an den Randschenkeln (13, 14) der Schlittenführungs-C-Nut (6) trägt.

**8.** Bohrlehre nach den Ansprüchen 1 bis 7, dadurch gekennzeichnet, daß der Seitenanschlagträger (43) mittels einer Griffschraube (47) an den Randschenkeln (34, 35) der Anschlagträger-C-Nut (9) festspannbar ist und einen über die Lochreihe (8) hinausragenden Querschenkel aufweist, an dessen der Lochschiene (1) zugewandten Hauptfläche (49) das Arretierglied (52) in Form eines zylindrischen Vorsprunges angeordnet ist und an dessen gegenüberliegender Hauptfläche (53) eine Führungsnut (54) für das Anschlagstück (42) angeordnet ist.

**9.** Bohrlehre nach Anspruch 8, dadurch gekennzeichnet, daß an der Führungsnut (54) ein Arretiervorsprung (55) und an dem Anschlagstück (42) Löcher (56) zur Festlegung diskreter Seitenanschlagspositionen angeordnet sind und daß das Anschlagstück (42) mittels einer, ein Langloch (44) des Anschlagstückes (42) durchsetzenden Griffschraube (46) am Seitenanschlagträger (43) für sich festspannbar ist.

**10.** Bohrlehre nach den Ansprüchen 4 und 5, dadurch gekennzeichnet, daß der Winkelanschlag (2) aus einem Winkelstück (26) besteht, dessen an der Lochschiene (1) anliegender Schenkel (37) mit zwei parallelen, quer zur Lochreihe gerichteten Langlöchern (39, 40) versehen ist, von denen eines (40) von einer Griffschraube (33) zur Festspannung des Winkelstückes (26) am Winkelstückträger (27) und das andere (39) von einer Griffschraube (32) zur Festspannung des Winkelanschlages (2) an den Randschenkeln (34, 35) der Anschlagträger-C-Nut (9) der Lochschiene (1) durchsetzt ist.

_Fig.1_

Fig.2

Fig. 3

Fig.6

Fig.7

*Fig.4*

*Fig.5*

*Fig.8*

Fig.9

Fig.10

Europäisches
Patentamt

**EUROPÄISCHER RECHERCHENBERICHT**

Nummer der Anmeldung

EP    92 10 9255

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 050 210 (ZEG ZENTRALEINKAUF ...) | 1 | B23B47/28 |
| A | * Seite 3, Zeile 31 - Seite 6, Zeile 25; | 5,6 | |
| | Abbildungen 1-3 * | | |
| | --- | | |
| A | DE-A-2 142 164 (KNIEF) | 2,7 | |
| | * Seite 2, Zeile 10 - Zeile 11; Abbildung 4 * | | |
| | --- | | |
| A | US-A-3 807 889 (KIEZEL) | | |
| | --- | | |
| A | AT-A-311 028 (SCHLOSSER) | | |
| | --- | | |
| A | DE-C-591 291 (BENDER) | | |
| | --- | | |
| A | US-A-2 838 966 (CAMPBELL) | | |
| | ----- | | |
| | | | **RECHERCHIERTE SACHGEBIETE (Int. Cl.5)** |
| | | | B23B |
| | | | B27C |

Der vorliegende Recherchenbericht wurde für alle Patentansprüche erstellt

| Recherchenort | Abschlußdatum der Recherche | Prüfer |
|---|---|---|
| DEN HAAG | 08 SEPTEMBER 1992 | BOGAERT, F.L. |